# EUROPÄISCHE PATENTANMELDUNG

(11) **EP 2 259 444 A2**
(43) Veröffentlichungstag der Anmeldung: **08.12.2010**
(21) Anmeldenummer: 10162843.6
(22) Anmeldetag: 14.05.2010
(51) Int. Cl.: H04B 7/06, H04B 7/08, H04B 1/00

(54) **Anordnung und Verfahren zur Steuerung einer Raumdiversitätssender- und -empfängerstruktur**

(30) Priorität: 02.06.2009 DE 102009023480
(71) Anmelder: Technische Universität Dresden, 01069 Dresden (DE); IHP GmbH, 15236 Frankfurt/Oder (DE)
(72) Erfinder: Eickhoff, Ralf, 01159, Dresden (DE); Mayer, Uwe, 01159, Dresden (DE); Kraemer, Rolf, 15517, Fürstenwalde/Spree (DE)
(74) Vertreter: Lippert, Stachow & Partner

(57) **Zusammenfassung**

Der Erfindung, welche eine Anordnung und ein Verfahren zur Steuerung einer Raumdiversitätssender- und -empfängerstruktur betrifft, liegt die Aufgabe zugrunde, eine Anordnung und ein zugehöriges Verfahren anzugeben, womit der Aufwand für die Kommunikation zwischen den parallel arbeitenden Sende- und Empfangseinheiten und Basisbandanordnung reduziert wird. Die Aufgabe wird anordnungsseitig dadurch gelöst, dass zwischen der Basisbandanordnung und den Sende- und Empfangseinheiten eine Steueranordnung zur Steuerung der Sende- und Empfangseinheiten angeordnet ist. Die Aufgabe wird verfahrensseitig dadurch gelöst, dass die berechneten Gewichte in einem Speicher gespeichert werden und dass die gespeicherten Gewichte aus diesem Speicher ausgelesen und an zugehörige Sende- und Empfangseinheiten übertragen werden.

## Beschreibung

Die Erfindung betrifft eine Anordnung zur Steuerung einer Raumdiversitätssender- und -empfängerstruktur, welche mehrere parallel angeordnete Sende- und Empfangseinheiten und eine mit diesen Sende- und Empfangseinheiten verbundene Basisbandanordnung umfasst.

Die Erfindung betrifft auch ein Verfahren zur Steuerung einer Raumdiversitätssende- und -empfängerstruktur, bei welchem Gewichte berechnet und an mehrere parallel arbeitende Sende- und Empfangseinheiten übertragen werden.

Raumdiversitätssende- und -empfängerstrukturen bestehen aus mehreren parallel geschalteten und betriebenen Sende- und Empfangseinheiten, welche auch als Transceiver bezeichnet werden und mit einer Antenne verbunden sind.

Diesen parallelen Sende- und Empfangseinheiten ist für die Signalverarbeitung der räumlichen Signale, wie beispielsweise die Kodierung oder Dekodierung der Signale, eine für alle Sende- und Empfangseinheiten zuständige digitale Basisbandanordnung vorgeschaltet.

Die Konfiguration und Steuerung der einzelnen Sende-und/oder Empfangseinheiten wird dabei beispielsweise über eine separate, serielle Datenübertragung von der Basisbandanordnung zu den einzelnen Sende- und Empfangseinheiten, welche auch als analoge Frontends bezeichnet werden, vorgenommen.

Raumdiversität umfasst verschiedene Übertragungsverfahren, bei denen das gleiche Funksignal von einer Sendeeinheit über verschiedene Funkwege zur Empfangseinheit übertragen und von mehreren Antennen empfangen wird.

Die von den verschiedenen Antennen empfangenen Signale werden derart kombiniert, dass dem Receiver ein optimales Empfangssignal zur Verfügung gestellt wird. Da die Signale mit unterschiedlichen Phasenlagen und Empfangssignalstärken an den Antennen anliegen, müssen diese Kennwerte bei der Kombination der Funksignale berücksichtigt werden.

Aus dem Stand der Technik ist bekannt, durch eine geeignete Phasen- und Amplitudenbelegung einer Gruppenantenne sowohl ihre Hauptstrahlrichtung als auch die Lage und Breite der Nulleinzüge zu steuern. Somit ist es möglich, winkelmäßig vom Nutzsignal abgesetzte Störer selektiv zu unterdrücken.

Gruppenantennen bestehen aus mehreren zusammengeschalteten, meist gleichen Einzelantennen, sogenannten Einzelstrahlern. Der Nulleinzug stellt ein Minimum der Richtcharakteristik einer (Gruppen-)Antenne dar.

Diese Unterdrückung und somit die Anpassung an die momentane Empfangskonstellation erfolgt bei sogenannten adaptiven Antennen, bei denen es möglich ist, die Abstrahlcharakteristik dynamisch so einzustellen, dass die Auswirkungen von Rauschen, Interferenzen und Mehrwegausbreitung minimiert werden, automatisch.

Für dieses Verfahren werden beispielsweise durch einen Regelkreis gesteuert die Amplituden und Phasen der einzelnen Antennen vor ihrer Überlagerung derart beeinflusst, dass der Signal/Störgeräusch-Abstand des Gesamtantennensignals optimiert wird.

Die Werte zum Einstellen der Amplituden und Phasen bzw. der Real- und Imaginärteile einzelner Signale werden als Gewichte bezeichnet.

Aus dem Stand der Technik sind Lösungen bekannt, bei denen eine gemeinsame serielle Datenübertragung für alle analogen Frontends mit anschließender Möglichkeit zur Speicherung der jeweiligen Konfiguration der analogen Frontends genutzt werden.

Jedoch beziehen sich diese Steuerungsmöglichkeiten lediglich auf die allgemeinen Parameter bei der Signalübertragung der Sende- und Empfangseinheiten, wie Einstellung der Verstärkung, Übermittlung von RSSI (Received Signal Strength Indicator - Indikator für die Empfangsfeldstärke kabelloser Kommunikationsanwendungen) und andere Werte.

Weiterhin sind aus dem Stand der Technik Lösungen bekannt, bei welchen neben einer digitalen Steuerung der Sende- und Empfangseinheiten mittels einer Kommunikationsschnittstelle einzelne digitale oder einzelne analoge Kontrollsignale verwendet werden.

Der Nachteil des Standes der Technik bei der Verwendung einzelner digitaler und/oder analoger Kontrollsignale liegt in dem hohen Aufwand für die Kommunikation zwischen analogem Frontend und Basisband, was zu größeren und komplexeren Systemen führt und so die Kosten sowohl bei der Entwicklung als auch bei der Fertigung erhöht.

Durch die einzelnen digitalen Kontrollsignale steigt die Anzahl der benötigten Ein- und Ausgänge des analogen Frontends stark an. Dies gilt insbesondere bei der Verwendung von Raumdiversitätssendern und -empfängern mit mehreren Antennen, welche mehr Einstellungsmöglichkeiten als Ein-Antennensysteme bieten. Außerdem haben analoge Kontrollsignale auch den Nachteil, dass diese aufgrund des Signal-Rausch-Abstandes nur begrenzte Auflösungsmöglichkeiten und damit nur begrenzte Steuermöglichkeiten bieten.

Ansätze, welche digitale, serielle Kommunikations-Schnittstellen nutzen, benötigen immer noch eine hohe Anzahl von Ein- und Ausgängen, falls für jedes analoge Frontend innerhalb des Mehrantennensystems eine separate Schnittstelle verwendet wird. Die Zusammenfassung der Kontrollsignale durch eine einzige serielle Datenübertragung und einer anschließenden Speicherung der Konfiguration für die einzelnen Sende- und Empfangseinheiten im analogen Frontend senkt zwar den Aufwand der Steuerung, wird jedoch nur zur Kontrolle der jeweiligen Sende- und Empfangseinheiten verwendetet, z. B. zur Übermittlung der Empfangsstärke der Signale (RSSI) oder der Einstellung der Verstärkung.

Der Erfindung liegt somit die Aufgabe zugrunde, eine Anordnung und ein zugehöriges Verfahren zur Steuerung einer Raumdiversitätssender- und -empfängerstruktur anzugeben, womit der Aufwand für die Kommunikation zwischen den parallel arbeitenden Sende- und Empfangseinheiten und Basisbandanordnung reduziert wird.

Gemäß der Erfindung wird die Aufgabe bei einer Anordnung zur Steuerung einer Raumdiversitätssender- und -empfängerstruktur der eingangs genannten Art dadurch gelöst, dass zwischen der Basisbandanordnung und den Sende- und Empfangseinheiten eine Steueranordnung zur Steuerung der Sende- und Empfangseinheiten angeordnet ist.

Die Nachteile aus dem Stand der Technik, welche in der hohen Anzahl von Ein- und Ausgängen zwischen der Basisbandeinheit und den Sende- und Empfangseinheiten, dem erheblichen Kommunikationsaufwand zwischen diesen Einheiten sowie den bekannten Nachteilen bei der Nutzung analoger Signale zur Kommunikation liegen, werden durch die erfindungsgemäße Steueranordnung beseitigt.

Die Steueranordnung ist beispielsweise über einen seriellen digitalen Bus mit der Basisbandanordnung verbunden und speichert die von der Basisbandeinheit berechneten Gewichte sowie andere Steuer- und Kontrolldaten in einem Speicher der Steueranordnung ab. Somit werden die Signale zwischen der Basisbandeinheit und der Steueranordnung digital und mit einer geringen Busbreite übertragen, wobei die Art des Bussystems nicht auf serielle Bussysteme beschränkt ist. Ein paralleles Bussystem kann ebenfalls zur Anwendung kommen.

Da die von der Basisbandeinheit berechneten Gewichte in der Steueranordnung gespeichert werden, können den Sende- und Empfangseinheiten durch eine geeignete übergeordnete Steuerung der Raumdiversitätssender- und -empfängerstruktur diese Gewichte, ohne die Basisbandeinheit zu nutzen, übermittelt werden. Dies gilt auch für alle anderen Steuer-und Kontrolldaten, welche in der Steueranordnung gespeichert werden können. Dies ist besonders vorteilhaft für den Fall, dass sich die Gewichte über einen Zeitraum hinweg nicht verändern. Ist keine Veränderung der Gewichte notwendig, werden lediglich die gespeicherten Werte der Gewichte aus der Steuereinheit an die jeweilige Sende- und Empfangseinheit weitergegeben. Nur für den Fall, dass eine Neuberechnung eines Gewichts vorgenommen werden muss, berechnet die Basisbandeinheit dieses neu. Dieses wird nach seiner Berechnung an die Steueranordnung übertragen und in dieser als neuer Gewichtswert zu einer bestimmten Sende- und Empfangseinheit gespeichert.

In einer Ausgestaltung ist vorgesehen, dass die Steueranordnung einen mit einem Eingang der Steueranordnung verbundenen Speicher zur Speicherung von Steuer- und Kontrolldaten und einen den Speicher steuernden Speicherkontroller aufweist, dass zwischen dem Speicher und den Ausgängen der Steueranordnung, welche mit den Sende- und Empfangseinheiten verbunden sind, ein Digital-Analog-Wandler angeordnet ist.

Die erfindungsgemäße Steueranordnung beinhaltet einen Speicher zur Speicherung der Gewichte und anderer Steuer-und Kontrolldaten. Dieser Speicher ist mit einem zugehörigen Speicherkontroller verbunden, welcher den Datenfluss zwischen dem Speicher und der Basisbandeinheit sowie dem nachgeordneten Digital-Analog-Wandler, also das Speichern und Auslesen von Daten regelt.

Die aus dem Speicher ausgelesenen Gewichte liegen in einer digitalen Form vor und müssen vor ihrer Übertragung an die zugehörige Sende- und Empfangseinheit durch den zwischen dem Speicher und dem Ausgang der Steueranordnung angeordneten Digital-Analog-Wandler in analoge Steuersignale gewandelt werden.

Die Anordnung des Digital-Analog-Wandler in der Steueranordnung ist nicht zwingend. Dieser kann beispielsweise auch in der nachgeschalteten Sende- und Empfangseinheit eingangsseitig angeordnet werden.

In einer Ausführung ist vorgesehen, dass die Steueranordnung ein Businterface beinhaltet, welches mit dem Eingang der Steueranordnung, dem Speicher und dem Speicherkontroller verbunden ist.

In einer besonderen Ausführung ist vorgesehen, dass das Businterface ein Seriell-Parallel-Businterface ist und dass zwischen dem Eingang der Steueranordnung und dem Speicherkontrollen ein Kontroller, welcher beispielsweise eine Paketerkennung durchführt, angeordnet ist.

Zur Verringerung der zwischen der Basisbandeinheit und der Steueranordnung benötigten Verbindungsleitungen kann ein serieller Bus zum Einsatz kommen, welcher mit einem Seriell-Parallel-Interface in der Steueranordnung verbunden ist. In diesem werden die von der Basisbandeinheit seriell übertragenen Daten in parallel anliegende Daten zur Übertragung auf dem in der Steuereinheit zwischen dem Interface und dem Speicher sowie dem Speicherkontroller angeordneten parallelen Datenbus gewandelt. Zur Detektion der über den seriellen Bus übertragenen Datenpakete ist in der Steueranordnung ein Kontroller angeordnet. Dessen Eingang ist mit dem Eingang der Steueranordnung verbunden. Der Ausgang des Kontrollers ist mit dem Speicherkontroller zur Übertragung des erzeugten Kontroll- oder Steuersignals zur Kennzeichnung der übertragenen Datenpakete verbunden.

In einer Ausgestaltungsform ist vorgesehen, dass zwischen dem Speicher und dem Digital-Analog-Wandler eine Einheit zur Veränderung der vom Speicher an den Digital-Analog-Wandler übertragenen Daten angeordnet ist.

Die im Speicher der Steueranordnung abgespeicherten Gewichte können durch eine Einheit zur Veränderung der vom Speicher an den Digital-Analog-Wandler übertragenen Daten vor ihrer Übertragung an die Sende- und Empfangseinheit verändert werden. Mittels dieser Veränderung der Gewichte kann die Steueranordnung eine Anpassung der Gewichte an unterschiedliche Parameter der Sende- Empfangseinheiten, welche durch Schwankungen beim Herstellungsprozess, Temperaturänderungen oder einem Alterungsprozess hervorgerufen werden können, realisieren.

Hierfür werden die Informationen zur Änderung der einzelnen Gewichte in Form einer Tabelle in der Steuereinheit hinterlegt und bei Bedarf, gesteuert durch die der Raumdiversitätssende- und -empfängerstruktur übergeordnete Steuerung, ausgewählt und zur Veränderung der von der Basisbandeinheit berechneten Gewichte genutzt.

In einer anderen Realisierung ist vorgesehen, dass in der Steuereinheit eine Einheit zur Erzeugung von Gewichts-Werten angeordnet ist, welche zur Ansteuerung mit dem Speicherkontroller verbunden ist und welche mit der Einheit zur Veränderung der vom Speicher an den Digital-Analog-Wandler übertragenen Daten oder dem Digital-Analog-Wandler verbunden ist.

Für Test- oder Kalibrierungsvorgänge kann die Steueranordnung selbständig mittels einer Einheit zur Erzeugung von Gewichts-Werten Gewichte erzeugen und diese an die Einheit zur Veränderung der vom Speicher an den Digital-Analog-Wandler übertragenen Daten oder diese direkt an den Digital-Analog-Wandler übertragen. Diese Funktion kann bei Vorgängen zur Kanalschätzung verwendet werden.

Gemäß der Erfindung wird die Aufgabe bei einem Verfahren zur Steuerung einer Raumdiversitätssender- und -empfängerstruktur der eingangs genannten Art dadurch gelöst, dass die berechneten Gewichte in einem Speicher gespeichert werden und dass die gespeicherten Gewichte aus diesem Speicher ausgelesen und an zugehörige Sende- und Empfangseinheiten übertragen werden.

Erfindungsgemäß werden die von der Basisbandeinheit berechneten Gewichte, welche Werte zum Einstellen der Amplitude und der Phase oder des Real- und Imaginärteils eines Signals umfassen, für alle Sende- und Empfangseinheiten beispielsweise in einem Speicher gespeichert. Hierfür werden die berechneten Gewichte von der Basisbandeinheit beispielsweise über einen Bus und ein Businterface zu einer aus Speicher und zugehörigem Speicherkontroller bestehenden Einheit übertragen. In diesem Speicher werden alle Gewichte gespeichert und können gesteuert durch eine entsprechende Steuerlogik der Raumdiversitätssender- und -empfängerstruktur ausgelesen und an die zugehörigen Sende- und Empfangseinheiten übertragen werden. Es wird also für jede einzelne Sende- und Empfangseinheit je ein Gewichtswert erzeugt, gespeichert und an diese übertragen. Somit kann jede Sende- und Empfangseinheit individuell gesteuert werden.

In einer Ausführung ist vorgesehen, dass die Gewichte in einer Basisbandeinheit berechnet werden.

Üblicherweise werden die Gewichte nach dem Stand der Technik in der Basisbandeinheit für jede Sende- und Empfangseinheit berechnet.

In einer Ausgestaltung der Erfindung ist vorgesehen, dass der Speicher außerhalb der Basisbandeinheit angeordnet wird. Der Speicher zur Speicherung der Gewichte ist außerhalb der Basisbandeinheit, zwischen der Basisbandeinheit und den Sende- und Empfangseinheiten angeordnet. Dieser ist über einen Bus mit der Basisbandeinheit verbunden. Darüber hinaus kann die Basisbandeinheit auch mit den Sende- und Empfangseinheiten beispielsweise mittels weiterer Steuerleitungen verbunden sein.

In einer besonderen Ausführung ist vorgesehen, dass die Gewichte nach dem Auslesen aus dem Speicher verändert und nachfolgend an zugehörige Sende- und Empfangseinheiten übertragen werden.

Die aus dem Speicher ausgelesenen Gewichte können vor der Übertragung an die entsprechende Sende- und Empfangseinheit verändert werden. Hierfür kann ein komplexer Wert für jede Sende- und Empfangseinheit hinterlegt werden, mit welchem das Gewicht verändert wird. Mittels einer derartigen Veränderung kann eine Anpassung an Abweichungen von Parametern der Sende- und Empfangseinheiten vorgenommen werden, welche beispielsweise durch Prozessschwankungen, Temperatur oder Alterung bedingt sein können.

Die Erfindung soll nachfolgend an einem Ausführungsbeispiel erläutert werden. In den zugehörigen Zeichnungen zeigt
- Figur 1: eine Struktur einer Raumdiversitätssende- und -empfängerstruktur,
- Figur 2: eine Darstellung der erfindungsgemäßen Steueranordnung und
- Figur 3: eine weitere Darstellung der erfindungsgemäßen Steueranordnung

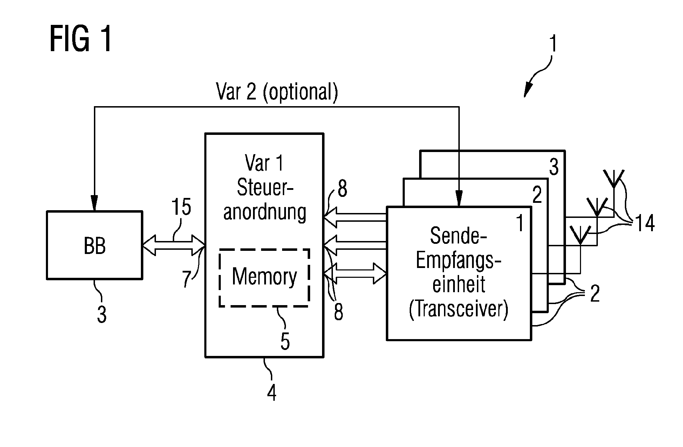

Figur 1 zeigt eine Anordnung einer Raumdiversitätssende- und -empfängerstruktur 1, bestehend aus einer Basisbandanordnung 3, einer mit der Basisbandanordnung 3 verbundenen erfindungsgemäßen Steueranordnung 4 und mehreren nachgeschalteten Sende- und Empfangseinheiten 2. Dies ist in der Figur 1 als erste Variante mit der Bezeichnung "Var1" dargestellt.

Die Basisbandanordnung 3 kann optional zur Übertragung von Steuer- oder Kontrollsignalen auch mit den Sende- und Empfangseinheiten 2 verbunden sein. Dies ist in der Figur 1 als zweite Variante mit der Bezeichnung "Var2" gekennzeichnet.

Die Basisbandanordnung 3 ist über einen seriellen oder parallelen Bus mit dem Eingang 7 der Steueranordnung 4 verbunden. Die Ausgänge 8 der Steueranordnung 4 sind mit den Sende- und Empfangseinheiten 2 verbunden. Die Sende- und Empfangseinheiten 2 sind ausgangsseitig mit je einer Antenne 14 verbunden. Nicht dargestellt in der Figur 1 ist die der Raumdiversitätssender- und -empfängerstruktur 1 übergeordnete zentrale Steuerung zur Koordination der Abläufe in der Anordnung bei verschiedenen Betriebsarten.

Die vorliegende Erfindung überträgt und speichert die durch die Basisbandanordnung 3 berechneten optimalen Gewichte zur Einstellung von Amplitude und Phase der einzelnen Antennensignale, welche einer räumlichen Kodierung und Dekodierung entsprechen, in einen Speicher 5 der Steueranordnung 4.

Die Übertragungseigenschaften der Raumdiversitätssender und -empfängerstruktur 1 können derart an den aktuellen Kanal optimal angepasst werden. Zusätzlich können Steuer- oder Kontrollsignale an die analogen Frontends 2 der Raumdiversitätssender- und -empfängerstruktur 1 über die gleiche Schnittstelle 15 wie der räumliche Kode - also die Gewichte - übertragen werden.

Diese Steuer- oder Kontrollsignale können ebenfalls für jedes Frontend 2 der Raumdiversitätssender- und -empfängerstruktur 1 in einem Speicher 5 der Steueranordnung 4 gespeichert werden. Somit können auch Informationen zur Einstellung der Verstärkung oder den Empfang charakterisierende Werte, wie RSSI, verarbeitet werden. Optional kann auch eine separate Schnittstelle zur Übertragung der Kontrollsignale genutzt werden.

Mit der Erfindung wird somit der zeitliche und räumliche Aufwand zur Steuerung von Raumdiversitätssender- und -empfängerstrukturen 1 reduziert, indem der notwendige Kommunikationsaufwand zwischen der Basisbandanordnung 3 und den Sende- und Empfangseinheiten 2 durch eine Speicherung der Gewichte für eine räumliche Kodierung und Dekodierung der Signale in der Steueranordnung 4 reduziert und vereinfacht wird.

Dabei werden die Gewichte im Speicher 5 der Steueranordnung 4 zwischengespeichert und können durch einfache durch die zentrale Steuerung erzeugte Kommandos zur Steuerung der einzelnen Einheiten 2 abgerufen werden. Zusätzlich können Kontrollinformationen für die einzelnen Frontends seriell übertragen und im Frontend gespeichert werden. Darüber hinaus können beispielsweise auch Statusinformationen der Raumdiversitätssender- und -empfängerstrukturen 1 aus der Steueranordnung 4 von der Basisbandeinheit 3 ausgelesen werden.

Gegenstand der Erfindung ist die Übertragung, Zwischenspeicherung, Anpassung und Berechnung der Gewichte einer Raumdiversitätssender- und -empfängerstruktur 1 für den optimalen Betrieb unter den aktuellen Bedingungen des Kanals sowie die Übertragung und Speicherung von Kontrollsignalen für die einzelnen Frontends 2 beispielsweise in dem gleichen Speicher 5 wie für den räumliche Kodierung und Dekodierung.

Ein Abruf von bereits gespeicherten Konfigurationen erfolgt ebenfalls über diese beispielsweise serielle Kommunikationsschnittstelle 15 mittels Kontrollpaketen.

Die Gewichte für den optimalen Betrieb werden durch die Basisbandanordnung 3 für alle Sende- und Empfangseinheiten 2 der Raumdiversitätssender und -empfängerstruktur 1 bestimmt und beispielsweise durch eine serielle, digitale Kommunikationsschnittstelle 15 übertragen und in der Steueranordnung 4 gespeichert. Dabei ist eine Übertragung der Gewichte sowie weiterer Steuer- oder Kontrollsignale von der Basisbandanordnung 3 zu den Sende- und Empfangseinheiten 2 über ein beliebiges Bussystem möglich, welches den Forderungen an die Übertragungsgeschwindigkeit entspricht.

Die Ausgänge Antenna 0 bis Antenna n-1 sind mit den nachgeschalteten Sende- und Empfangseinheiten 2 zur Übertragung der Gewichte verbunden. Über diese Verbindung werden auch Steuer- und Kontrolldaten ausgetauscht. Außerdem sind die Ausgänge Transceiver 0 bis Transceiver n-1 optional ebenfalls mit den Sende- und Empfangseinheiten 2 zur Übertragung von beispielweise einem Wert für die einzustellende Verstärkung oder zur Übermittlung von RSSI (Received Signal Strength Indicator - Indikator für die Empfangsfeldstärke kabelloser Kommunikationsanwendungen) verbunden.

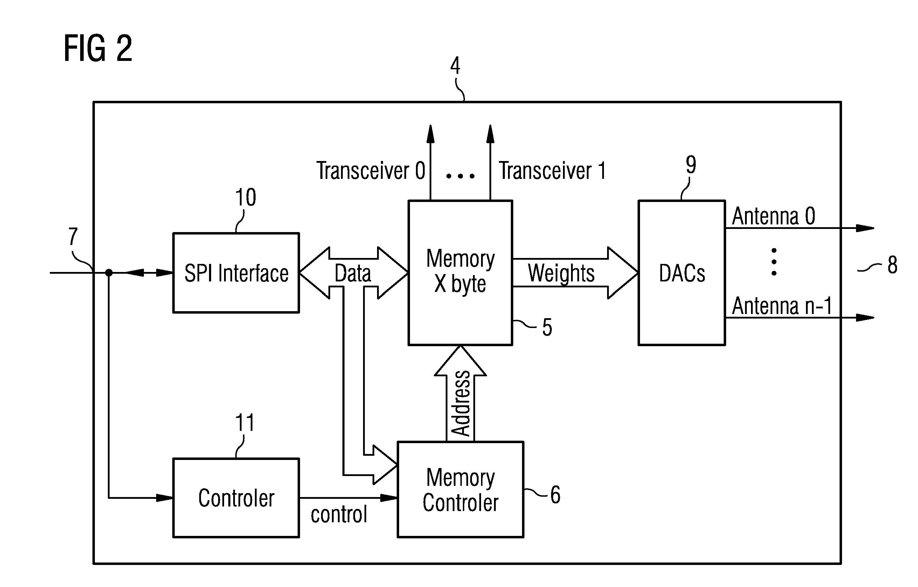

In der Figur 2 ist eine erste Ausführung der Steueranordnung 4 der Raumdiversitätssender- und -empfängerstruktur 1 dargestellt.

Figur 2 zeigt die mit dem Eingang 7 der Steueranordnung 4 verbundenen Baugruppen Businterface 10 und Kontroller 11.

Dabei dient das Businterface 10 zur Umsetzung der seriellen Daten von der Basisbandeinheit 3 in parallele Daten, welche dann an den Speicher 5 und den Speicherkontroller 6 über einen parallelen Bus weitergeleitet werden. Der Kontroller 11 hat dabei die Aufgabe, Beginn und Ende der seriell übertragenen Datenpakete zu detektieren und den Speicherkontroller 6 zu steuern.

Der Speicher 5 ist ebenfalls über einen parallelen Bus mit dem Digital-Analog-Wandler 9 zur Übertragung der im Speicher 5 gespeicherten Gewichte verbunden. Die in eine analoge Signalform gewandelten Gewichte werden über die Ausgänge 8 der Steueranordnung 4 an die angeschlossenen Sende- und Empfangseinheiten 2 ausgegeben. Über diesen Weg können auch Steuer und Kontrolldaten an die Sende- und Empfangseinheiten 2 ausgegeben oder von diesen empfangen werden.

Der Speicher 5 verfügt optional über weitere Ausgänge "Transceiver 0 ... n-1" zur Ausgabe von Steuer- und Kontrolldaten an die Sende- und Empfangseinheiten 2.

Die Vorgänge beim Speichern und Auslesen von Daten in den und aus dem Speicher 5 werden durch den Speicherkontroller 6 gesteuert.

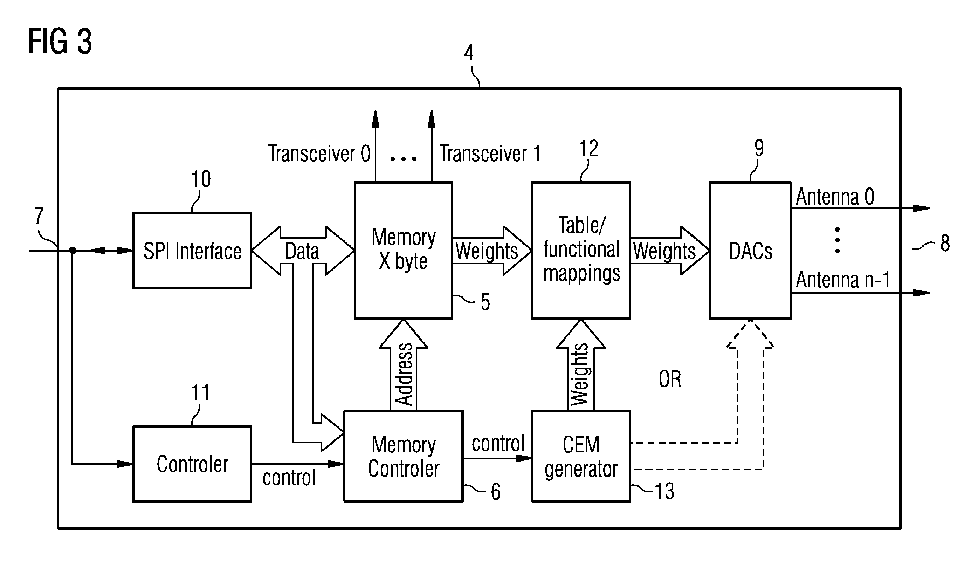

Die Figur 3 zeigt eine erweiterte Steueranordnung 4, in welcher zusätzlich eine Einheit 12 zur Veränderung der vom Speicher an den Digital-Analog-Wandler 9 übertragenen Daten und eine Einheit zur Erzeugung von Gewichts-Werten 13 angeordnet ist.

Mittels der Einheit 12, welche zwischen dem Ausgang des Speichers 5 und dem Digital-Analog-Wandler 9 angeordnet ist, können die aus dem Speicher 5 ausgelesenen Gewichte verändert und nach ihrer Veränderung an den Digital-Analog-Wandler 9 ausgegeben werden. Das heißt, das Gewicht kann beispielsweise an eine temperatur- oder alterungsbedingte Veränderung von Parametern innerhalb einer speziellen Sende-und Empfangseinheit 2 angepasst werden.

Hierzu kann beispielsweise bei der Herstellung, Inbetriebnahme oder innerhalb eines Kalibrierungsprozesses der Raumdiversitätssender- und -empfängerstruktur 1 eine Abweichung eines vorgegebenen Parameters von seinem Sollwert ermittelt werden. Aus dieser Abweichung wird dann ein Korrekturwert ermittelt und unter Bezugnahme zu einer speziellen Sende- und Empfangseinheit 2 in der Einheit 12 in einem Speicher beispielsweise in Form einer Tabelle abgespeichert.

Durch einen Steuerbefehl der übergeordneten Steuerung der Raumdiversitätssender- und -empfängerstruktur 1 gesteuert werden die Gewichte vor der Weiterleitung zum Digital-Analog-Wandler 9 derart verändert, dass die ermittelte Abweichung des Parameters somit kompensiert wird.

Prinzipiell ist eine derartige Kompensation von abweichenden Parametern auch für andere an die Sende- und Empfangseinheiten 2 weitergeleitete Stellgrößen, wie beispielsweise den Wert der Verstärkung möglich.

Weiterhin können auch die zur Kanalschätzung benötigten geeigneten Matrizen und Gewichte in der Steueranordnung 4 zwischengespeichert werden. Eine erneute Übertragung von der Basisbandanordnung 3 zum analogen Frontend 2 ist bei Änderung der Kanaleigenschaften nicht notwendig.

Die serielle Schnittstelle basiert beispielsweise auf einer abgewandelten Version des SPI von Freescale. Das Übertragungsprotokoll besitzt eine ähnliche Funktionalität. Die entsprechende Sende- und Empfangseinheit 2 wird durch eine Leitung ausgewählt und die Daten werden synchron zu einer Taktleitung übertragen. Die Unterscheidung zwischen der Übertragung von Steuer- oder Kontrolldaten und Gewichten wird von der Schnittstelle selbsttätig vorgenommen und ist von dem Format der Datenpakete abhängig.

Die Informationen aus den Datenpaketen, die über die Schnittstelle überragen werden, werden auch unter Nutzung des Kontrollers 11 extrahiert. Die Speicherung der Gewichte aus der Basisbandanordnung 3 erfolgt in einem geeigneten Speicher 5 unter Bezugnahme zur jeweiligen Antenne oder zur jeweiligen Sende- und Empfangseinheit 2. Mittels entsprechender Multiplexer wird die Ausgabe der Daten des Speichers 5 an das jeweilige analoge Frontend 2 gesteuert.

Diese Gewichte können wie oben beschrieben durch Tabellen und funktionale Abbildungen an die Eigenschaften des jeweiligen analogen Frontends 2 angepasst werden, um Variationen der Frontendparameter, beispielsweise durch Prozessschwankungen, Temperatur oder Alterung, auszugleichen. Gewichtsmatrizen zur Kanalschätzung werden im analogen Frontend bestimmt und können durch spezielle Adressen der jeweiligen Antenne ausgewählt werden.

Die Gewichte für die jeweiligen Antennen der jeweiligen Sende- und Empfangseinheit 2 werden im Speicher 5 vorgehalten und können durch Kontrollpakete abgerufen werden, was die Einstellgeschwindigkeit für MIMO-Kommunikationen erhöht und die Komplexität des Systems absenkt.

Die Einstellgeschwindigkeit von MIMO-Übertragungsparameter und die Kontrolle der Transceiver 2 werden wesentlich beschleunigt, da die räumliche Kodierung und Dekodierung sowie die Kontrollinformationen in der Steueranordnung 4 vorgehalten werden und durch Kontrollpakete der zentralen Steuerung abgerufen werden können.

Durch eine Anpassung der Gewichte mittels Tabellen und funktionalen Abbildungen werden die jeweiligen Eigenarten des analogen Frontends in den Gewichten berücksichtigt und so kann eine zuverlässige Signalverarbeitung des analogen Frontends jeder einzelnen Antenne gewährleistet werden.

Die Erfindung führt zu einer geringeren Leistungsaufnahme des Mehrantennensystems. Die gemeinsame serielle Schnittstelle für alle Sende- und Empfangseinheiten 2 der Raumdiversitätssender und -empfängerstruktur 1 reduziert die Systemgröße und die Anzahl von benötigten Ein- und Ausgängen.

### Bezugszeichenliste

- 1: Anordnung einer Raumdiversitätssende- und - empfängerstruktur
- 2: Sende- und Empfangseinheiten/Frontends
- 3: Basisbandanordnung
- 4: Steueranordnung
- 5: Speicher
- 6: Speicherkontroller
- 7: Eingang der Steueranordnung
- 8: Ausgang der Steueranordnung
- 9: Digital-Analog-Wandler
- 10: Businterface
- 11: Kontroller
- 12: Einheit zur Veränderung der vom Speicher an den Digital-Analog-Wandler übertragenen Daten
- 13: Einheit zur Erzeugung von Gewichts-Werten
- 14: Antenne
- 15: Schnittstelle

## Patentansprüche

1. Anordnung zur Steuerung einer Raumdiversitätssender-und -empfängerstruktur, welche mehrere parallel angeordnete Sende- und Empfangseinheiten und eine mit diesen Sende- und Empfangseinheiten verbundene Basisbandanordnung umfasst, **dadurch gekennzeichnet, dass** zwischen der Basisbandanordnung (3) und den Sende- und Empfangseinheiten (2) eine Steueranordnung (4) zur Steuerung der Sende- und Empfangseinheiten (2) angeordnet ist.

2. Anordnung nach Anspruch 1, **dadurch gekennzeichnet, dass** die Steueranordnung (4) einen mit einem Eingang der Steueranordnung (4) verbundenen Speicher (5) zur Speicherung von Steuer-und Kontrolldaten und einen den Speicher (5) steuernden Speicherkontroller (6) aufweist, dass zwischen dem Speicher (5) und Ausgängen der Steueranordnung (4), welche mit den Sende- und Empfangseinheiten (2) verbunden sind, ein Digital-Analog-Wandler (9) angeordnet ist.

3. Anordnung nach Anspruch 2, **dadurch gekennzeichnet, dass** die Steueranordnung (4) ein Businterface (10) beinhaltet, welches mit dem Eingang der Steueranordnung (4), dem Speicher (5) und dem Speicherkontroller (6) verbunden ist.

4. Anordnung nach Anspruch 3, **dadurch gekennzeichnet, dass** das Businterface (10) ein Seriell-Parallel-Businterface ist und dass zwischen dem Eingang der Steueranordnung (4) und dem Speicherkontroller (6) ein Kontroller (11) angeordnet ist.

5. Anordnung nach einem der Ansprüche 2 bis 4, **dadurch gekennzeichnet, dass** zwischen dem Speicher (5) und dem Digital-Analog-Wandler (9) eine Einheit (12) zur Veränderung der vom Speicher (5) an den Digital-Analog-Wandler (9) übertragenen Daten angeordnet ist.

6. Anordnung nach einem der Ansprüche 2 bis 4, **dadurch gekennzeichnet**, das s in der Steueranordnung (4) eine Einheit (13) zur Erzeugung von Gewichts-Werten angeordnet ist, welche zur Ansteuerung mit dem Speicherkontroller (6) verbunden ist und welche mit der Einheit (12) zur Veränderung der vom Speicher (5) an den Digital-Analog-Wandler (9) übertragenen Daten oder dem Digital-Analog-Wandler (9) verbunden ist.

7. Verfahren zur Steuerung einer Raumdiversitätssender-und -empfängerstruktur, bei welchem Gewichte berechnet und an mehrere parallel arbeitende Sende- und Empfangseinheiten übertragen werden, **dadurch gekennzeichnet, dass** die berechneten Gewichte in einem Speicher (5) gespeichert werden und dass die gespeicherten Gewichte aus diesem Speicher (5) ausgelesen und an zugehörige Sende- und Empfangseinheiten (2) übertragen werden.

8. Verfahren nach Anspruch 7, **dadurch gekennzeichnet, dass** die Gewichte in einer Basisbandanordnung (3) berechnet werden.

9. Verfahren nach Anspruch 8, **dadurch gekennzeichnet, dass** der Speicher (5) außerhalb der Basisbandanordnung (3) angeordnet wird.

10. Verfahren nach einem der Ansprüche 7 bis 9, **dadurch gekennzeichnet, dass** die Gewichte nach dem Auslesen aus dem Speicher (5) verändert und nachfolgend an zugehörige Sende- und Empfangseinheiten (2) übertragen werden.
